# EUROPÄISCHE PATENTSCHRIFT

(11) **EP 3 708 923 B1**
(45) Veröffentlichungstag und Bekanntmachung des Hinweises auf die Patenterteilung: **22.09.2021**
(21) Anmeldenummer: 19162635.7
(22) Anmeldetag: 13.03.2019
(51) Int. Cl.: F24H 7/04, F28D 20/00

(54) **ENERGIESPEICHER ZUM SPEICHERN VON ELEKTRISCHER ENERGIE ALS WÄRME UND VERFAHREN HIERZU**
ENERGY STORAGE DEVICE FOR THE STORAGE OF ELECTRICAL ENERGY USED AS HEAT AND METHOD THEREFOR
ACCUMULATEUR D'ÉNERGIE PERMETTANT L'ACCUMULATION D'ÉNERGIE ÉLECTRIQUE EN TANT QUE CHALEUR ET PROCÉDÉ CORRESPONDANT

(43) Veröffentlichungstag der Anmeldung: 16.09.2020
(73) Patentinhaber: Lumenion GmbH, 10829 Berlin (DE)
(72) Erfinder: ZWINKELS, Andrew, 10827 Berlin (DE)
(74) Vertreter: Ridderbusch, Oliver

(56) Entgegenhaltungen:
- JP-A- H1 144 494
- US-A- 3 817 322
- US-A- 4 286 141
- US-A1- 2009 199 998

## Beschreibung

Die vorliegende Erfindung bezieht sich auf einen Energiespeicher zum Speichern von elektrischer Energie als Wärme nach dem Oberbegriff des Anspruchs 1. Außerdem betrifft die Erfindung ein Verfahren nach dem Oberbegriff des Anspruchs 13.

Im Zuge der verstärkten Nutzung regenerativer Energiequellen, insbesondere Wind- und Sonnenenergie, kommt es zu stärkeren Fluktuationen der erzeugten Elektrizitätsmenge. Daher nimmt die Bedeutung von Energiespeichern zum Speichern überschüssiger elektrischer Energie immer weiter zu. Für die sogenannte Energiewende, das heißt den Umstieg auf regenerative Energiequellen, kommt Energiespeichern eine Schlüsselrolle zu. Elektrochemische Speicher (Batterien) können trotz hoher Kosten nur verhältnismäßig geringe Energiemengen speichern. Weit größere Energiemengen können in Form von Wärmeenergie zwischengespeichert werden. Anschließend kann die Wärmeenergie teilweise wieder in elektrische Energie umgewandelt werden, während ein Rest für Heizzwecke genutzt werden kann.

Ein gattungsgemäßer Energiespeicher zum Speichern von elektrischer Energie als Wärme umfasst:
- einen elektrischen Heizer zum Umwandeln von elektrischer Energie in Wärme,
- Wärmespeicherkörper, welche durch die Wärme erwärmt werden,
- einen Wärmetauscher zum Ausgeben von Wärmeenergie aus dem Energiespeicher und
- eine Druckausgleichsleitung, welche in das Gehäuse führt.

In entsprechender Weise umfasst ein gattungsgemäßes Verfahren zum Betreiben eines Energiespeichers zum Speichern von elektrischer Energie als Wärme die folgenden Schritte:
- Umwandeln von elektrischer Energie in Wärme mittels eines elektrischen Heizers,
- Erwärmen von Wärmespeicherkörpern durch die Wärme, die vom elektrischen Heizer erzeugt wird, wobei die Wärmespeicherkörper in einem Gehäuse angeordnet sind,
- Ausgeben von Wärmeenergie aus dem Energiespeicher mittels eines Wärmetauschers und
- Bereitstellen eines Druckausgleichs im Gehäuse über eine Druckausgleichsleitung, die mit dem Gehäuse verbunden ist.

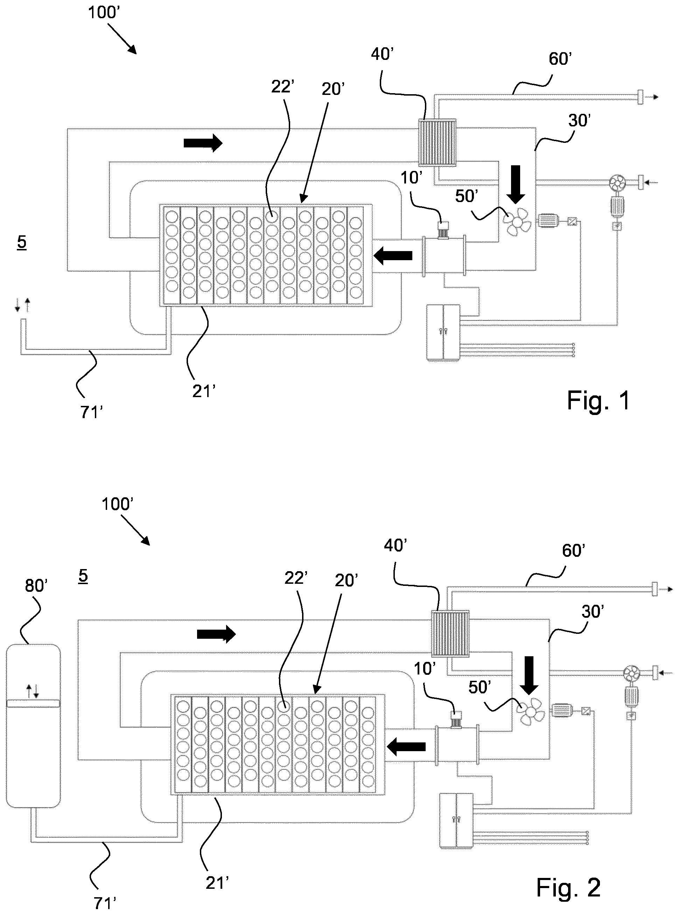

Ein gattungsgemäßer Energiespeicher 100' ist zur Veranschaulichung in Fig. 1 gezeigt. Die nachfolgenden Eigenschaften des gattungsgemäßen Energiespeichers 100' können auch bei einem erfindungsgemäßen Energiespeicher verwirklicht sein, sofern nicht ausdrücklich anders angemerkt. Der Energiespeicher 100' umfasst einen elektrischen Heizer 10', welcher mit Hilfe von elektrischer Energie ein Wärmetransferfluid erhitzt. Das Wärmetransferfluid kann insbesondere ein Gas oder Gasgemisch sein. Wird zur sprachlichen Kürze nachstehend ein "Gas" genannt, soll dies auch ein Gasgemisch umfassen können. Der Energiespeicher 100' umfasst weiterhin Wärmespeicherkörper 20', welche in einem Gehäuse 21' aufgenommen sind. Die Wärmespeicherkörper 20' können insbesondere Metallkörper oder Metallstangen sein. Das vom elektrischen Heizer 10' erhitzte Gasgemisch wird zu den Wärmespeicherkörpern 20' geleitet und erhitzt diese. Zum Entnehmen von Wärmeenergie wird das Gasgemisch (Wärmetransferfluid) zu einem Wärmetauscher 40' geleitet, wo beispielhaft Wärme auf ein anderes Fluid in einem separaten Kreislauf 60' übertragen wird. Das Wärmetransferfluid wird entlang eines Fluidkreislaufs 30' befördert, wozu eine Strömungsmaschine 50', beispielsweise ein Ventilator, vorhanden ist.

Weil die Wärmespeicherkörper 20' zur Energiespeicherung über ein großes Temperaturintervall betrieben werden, hat auch das Wärmetransferfluid betriebsabhängig sehr unterschiedliche Temperaturen. Dadurch kann auch der Druck des Wärmetransferfluides über einen großen Druckbereich variieren. Ein übermäßiger Druck im Gehäuse 21' sollte vermieden werden, beispielsweise aus Sicherheitsgründen. Daher umfasst der Energiespeicher 100' eine Druckausgleichsleitung 71', welche mit dem Innenraum des Gehäuses 21' verbunden ist.

Bei der in Fig. 1 dargestellten Gestaltung führt die Druckausgleichsleitung 71' in eine Umgebung 5 des Energiespeichers 100'. Bei einem übermäßigen Druck im Gehäuse 20' kann ein Teil des Wärmetransferfluides aus dem Gehäuse 20' in die Umgebung 5 austreten. Kühlt darauf das Wärmetransferfluid im Gehäuse 20' ab und sinkt somit der Druck im Gehäuse 20', muss auch wieder Wärmetransferfluid in das Gehäuse 20' einströmen, wozu bei Fig. 1 Umgebungsluft durch die Druckausgleichsleitung 71' einströmt. In dieser Gestaltung ist nachteilig, dass Umgebungsluft einen erheblichen Anteil an Sauerstoffgas O₂ enthält, welches gerade bei metallischen Wärmespeicherkörpern 20' zu Korrosion und Materialschäden führen kann.

Ein ähnlicher gattungsgemäßer Energiespeicher ist von der Anmelderin im erteilten US-Patent Nr. US 10,077,949 B2 beschrieben, siehe beispielsweise den dortigen Anspruch 1 und die Fig. 2.

Das Einleiten eines sauerstoffhaltigen Gasgemisches in das Gehäuse kann vermieden werden, indem ein Expansionsvolumen verwendet wird. Ein solcher Aufbau wurde von der Anmelderin in Fig. 7 aus WO 2019/025182 A1 beschrieben und ist schematisch in der beigefügten Fig. 2 gezeigt. Hierbei führt die Druckausgleichsleitung 71' nicht in eine Umgebung 5, sondern zu einem Expansionsvolumen 80'. Das Expansionsvolumen 80' ermöglicht eine Volumenvariation des vom Wärmetransferfluid eingenommenen Raums. Beispielsweise kann das Expansionsvolumen 80' einen Behälter mit elastischer Membran umfassen, welche druckabhängig verformt wird. So kann ein übermäßiger Druck des Wärmetransferfluides vermieden werden, ohne dass Wärmetransferfluid an eine Umgebung 5 abgegeben wird und folglich muss auch nicht aus der Umgebung (sauerstoffgashaltige) Luft als Wärmetransferfluid aufgenommen werden. Bei Nutzung eines Expansionsvolumens 80' kann insbesondere ein Schutzgas ausgewählt werden, welches nicht oder nur kaum zu Korrosion von Metallkomponenten im Gehäuse 20' führt, oder es kann ein Wärmetransferfluid mit besonders guten Wärmetransfereigenschaften gewählt werden. Nachteilig an der Nutzung eines Expansionsvolumens 80' ist der erheblich gesteigerte Raumbedarf.

Es wäre wünschenswert, einen Druckausgleich im Gehäuse 20' zu ermöglichen, ohne den hohen Raumbedarf des Expansionsvolumens aus Fig. 2 in Kauf zu nehmen und ohne sauerstoffgasreiche Umgebungsluft wie bei Fig. 1 einzuleiten.

Aus JP 11044494A ist ein Wärmespeicher bekannt, bei dem in einem Gehäuse eine elektrische Heizeinheit, ein Wärmespeichermaterial und Wärmetauscherrohre angeordnet sind. Als Wärmespeichermaterial wird ein Zuckeralkohol verwendet. Ein Freiraum im Gehäuse wird mit einem inerten Gas, insbesondere Stickstoff gefüllt. Das inerte Gas soll einen Druck haben, der ein Eindringen anderer Gase verhindert, womit insbesondere der Gasgehalt an Sauerstoff im Gehäuse gering gehalten werden soll. US 3817322A offenbart einen Energiespeicher gemäß dem Oberbegriff des Anspruchs 1 und beschreibt einen Wärmespeicher mit elektrischen Heizelementen und mehreren Behältern, die mit einem Wärmespeichermaterial gefüllt sind. Beim Wärmespeichermaterial handelt es sich hier um eine Flüssigkeit, z.B. Lithiumfluorid. Eine Druckregulierungseinheit reguliert den Gasdruck in den Behältern, indem entweder Gas abgelassen wird, oder ein Schutzgas aus einer Druckflasche eingelassen wird. Aus US 4286141 ist ein Wärmespeicher bekannt, bei dem elektrisch geheizt wird und trockenes Natriumsulfat, das in Pellets gepresst ist, als Wärmespeicherkörper verwendet wird. Ein Gas oder eine wasserfreie Flüssigkeit kann den Wärmeaustausch mit den Pellets bewirken, wobei als Gas Umgebungsluft oder anderes inertes Gas genannt wird. US 2009/0199998 A1 beschreibt einen Wärmespeicher, bei dem in einem Gehäuse zwei verschiedene Wärmetransfermedien genutzt werden, welche jeweils durch die latente Wärme eines Phasenübergangs Energie speichern. Ein oberer Abschnitt des Gehäuses bildet einen Freiraum, der mit einem inerten Gas gefüllt ist.

Als eine **Aufgabe** der Erfindung kann angesehen werden, ein Verfahren und einen Energiespeicher zum Speichern von elektrischer Energie als Wärme anzugeben, wobei ein Druckausgleich im Gehäuse des Energiespeichers effizient ermöglicht wird, ohne dass übermäßige Mengen an Sauerstoffgas in das Gehäuse gelangen.

Diese Aufgabe wird durch den Energiespeicher mit den Merkmalen des Anspruchs 1 und durch das Verfahren mit den Merkmalen des Anspruchs 13 gelöst.

Vorteilhafte Varianten des erfindungsgemäßen Energiespeichers und des erfindungsgemäßen Verfahrens sind Gegenstand der abhängigen Ansprüche und werden außerdem in der folgenden Beschreibung erläutert.

Bei dem Energiespeicher der oben genannten Art ist erfindungsgemäß die Druckausgleichsleitung mit einem Schutzgaserzeuger verbunden. Der Schutzgaserzeuger nimmt Umgebungsluft aus einer Umgebung des Energiespeichers auf. Zudem umfasst der Schutzgaserzeuger ein mit Sauerstoffgas reagierendes Material (Reduktionsmittel) zum Reduzieren eines Sauerstoffgehalts aufgenommener Umgebungsluft. Dadurch haben Gase, die über die Druckausgleichsleitung und den Schutzgaserzeuger in das Gehäuse einströmen, einen im Vergleich zu Umgebungsluft reduzierten Sauerstoffgasgehalt. Es wird demnach Umgebungsluft eingeleitet, welcher ein Teil des Sauerstoffanteils entzogen ist.

In entsprechender Weise ist bei dem Verfahren der oben genannten Art erfindungsgemäß vorgesehen, dass ein Schutzgaserzeuger Umgebungsluft aus einer Umgebung aufnimmt. Der Schutzgaserzeuger umfasst ein Reduktionsmittel, welches einen Sauerstoffgehalt aufgenommener Umgebungsluft verringert, indem Sauerstoffgas der aufgenommenen Umgebungsluft mit dem Reduktionsmittel reagiert. Der Schutzgaserzeuger ist mit der Druckausgleichsleitung verbunden, so dass Gase, die über den Schutzgaserzeuger und die Druckausgleichsleitung in das Gehäuse einströmen, einen im Vergleich zur Umgebungsluft reduzierten Sauerstoffgasgehalt haben.

Durch den Schutzgaserzeuger kann effizient der Anteil an Sauerstoffgas reduziert werden, das in das Gehäuse mit den Wärmespeicherkörpern eingeleitet wird. Unter Sauerstoffgas soll molekularer Sauerstoff O₂ verstanden werden, welcher leicht metallische Wärmespeicherkörper oder andere Metallkomponenten oxidieren könnte. Der Begriff "Sauerstoffgehalt" bezeichnet den Anteil an Sauerstoffgas O₂ und umfasst nicht andere sauerstoffhaltige Gase, wie CO₂, die weniger reaktionsfreudig sind und daher zu keiner Beeinträchtigung metallischer Wärmespeicherkörper führen. Durch den Schutzgaserzeuger muss daher nicht zwingend die atomare Menge an Sauerstoff, sondern vielmehr der Anteil an Sauerstoffgas der einströmenden Gase reduziert werden.

Das mit Sauerstoffgas reagierende Material (Reduktionsmittel) des Schutzgaserzeugers kann prinzipiell ein beliebiges Material sein, welches chemisch mit Sauerstoffgas reagiert. Beispielsweise kann es sich um Kohlenstoff oder eine kohlenstoffhaltige Verbindung handeln, insbesondere Kohle, Graphit, Carbon oder Carbon-Pellets, gepresstes Kohlen(stoff)pulver oder poröse Körper. Durch solche, insbesondere als Feststoff vorliegenden, kohlenstoffhaltigen Verbindung reagiert Sauerstoffgas insbesondere zu CO₂, womit im Wesentlichen N₂ und CO₂ aber kaum O₂ in das Gehäuse eingeleitet werden.

Alternativ oder zusätzlich kann das mit Sauerstoffgas reagierende Material auch ein Metall umfassen. Das Metall oxidiert und bindet so den Sauerstoff, so dass ebenfalls weniger O₂ in das Gehäuse eingeleitet wird. Als Metalle können beispielsweise Zink, Eisen oder Stahlwolle verwendet werden. Damit eine möglichst große Oberfläche des Reduktionsmittels zum Reagieren mit Sauerstoffgas bereitgestellt wird, kann das Reduktionsmittel in Form von Drähten, Gittern, Geweben oder Granulat vorliegen. Auch kann es auf einem Träger, beispielsweise in/auf Folien oder Papierbögen, angebracht sein.

Weitere Beispiele für Reduktionsmittel sind Alkalimetalle, insbesondere Lithium, Natrium und Kalium; Magnesium oder Aluminium; Hydride wie Lithiumaluminiumhydrid, Natriumborhydrid oder Natriumhydrid; Salze oder auch Natriumsulfit, Natriumdithionit, Natriumthiosulfat oder Hydrazin sowie Aldehyde.

Durch die Reaktion mit Sauerstoff wird das Reduktionsmittel des Schutzgaserzeugers aufgebraucht. Bei kohlenstoffhaltigen Reduktionsmitteln wird aus O₂ insbesondere CO₂ erzeugt, welches in das Gehäuse eingeleitet wird. Der Kohlenstoffgehalt des Reduktionsmittels sinkt somit. Hingegen oxidieren auf Metallen basierende Reduktionsmittel durch Sauerstoffgas zu Metalloxiden, welche anschließend nicht mehr oder kaum mit nachfolgendem Sauerstoffgas reagieren können. Daher ist ein regelmäßiger Austausch des Reduktionsmittels notwendig. Zu diesem Zweck kann der Schutzgaserzeuger eine Kassettenhalterung umfassen, wobei das Reduktionsmittel in einer austauschbaren Kassette angeordnet ist. Die Kassette kann in der Kassettenhalterung gehalten werden. Die Form der Kassette und der Kassettenhalterung können so gewählt sein, dass nur ein Einsetzen in einer bestimmten Ausrichtung möglich ist. Der Schutzgaserzeuger kann ein Gehäuse umfassen, in welchem die Kassettenhaltung und die Kassette angeordnet sind. Über eine verschließbare Öffnung im Gehäuse kann die Kassette entnommen werden. Das Gehäuse ist so gebaut, dass durchströmende (Umgebungs-)luft zwingend am Reduktionsmittel entlang bzw. durch dieses durch strömen muss, insbesondere durch die Kassette durch.

Eine Effizienz des Schutzgaserzeugers kann temperaturabhängig sein. Daher kann dieser eine Heizung umfassen zum Erwärmen des Reduktionsmittels. Die Heizung kann elektrisch betrieben sein und beispielsweise eine Ohm'sche Hitzequelle sein. Damit das Reduktionsmittel nicht unnötig schnell aufgebraucht wird, kann eine Steuereinheit zum Ein- und Ausschalten der Heizung vorgesehen sein. Die Steuereinheit schaltet die Heizung insbesondere nur dann ein, wenn ein Einströmen von Gasen in das Gehäuse erfolgt. Dies kann beispielsweise über einen Drucksensor gesteuert erfolgen. Der Drucksensor kann im Gehäuse angeordnet sein, wobei die Heizung eingeschaltet wird, wenn eine Druckuntergrenze unterschritten wird. Alternativ kann die Heizungseinschaltung auch an eine Strömung, Strömungsmessung oder Einwegventilstellung in der Druckausgleichsleitung gekoppelt sein.

Für einen idealen Betriebstemperaturbereich ist der Schutzgaserzeuger thermisch entkoppelt von den Wärmespeicherkörpern. Insbesondere kann das Gehäuse von einer Wärmeisolierung umschlossen sein oder eine Wärmeisolierung aufweisen, wobei sich der Schutzgaserzeuger außerhalb der Wärmeisolierung befindet.

Der Schutzgaserzeuger kann auch einen lonisator zum Ionisieren von Sauerstoffgas umfassen, um so eine chemische Reaktion zum Binden des Sauerstoffgases zu erleichtern. Der lonisator kann insbesondere auf elektrischen Feldern beruhen.

Das Gehäuse wird von Wärmetransferfluid durchströmt, um Wärme auf die Wärmespeicherkörper zu übertragen und/oder Wärme von den Wärmespeicherkörpern zu empfangen. Das Wärmetransferfluid kann gasförmig sein. Prinzipiell kann es auch Dampf umfassen, beispielsweise Wasserdampf. Bevorzugt kann das Wärmetransferfluid Luft sein oder Luft umfassen. Unter Luft kann ein Gasgemisch, insbesondere Umgebungsluft, verstanden werden. Durch den Schutzgaserzeuger wird dabei sichergestellt, dass die Luft kein Sauerstoffgas enthält oder zumindest weniger Sauerstoffgas als eine Umgebung des Energiespeichers. Daher stellt das Wärmetransferfluid im Gehäuse ein Schutzgas dar, welches nicht oder nur kaum zu Korrosion von Metallkomponenten im Gehäuse führt.

Der Schutzgaserzeuger kann prinzipiell auch innerhalb des Gehäuses angeordnet sein und über die Druckausgleichsleitung mit einer Umgebung des Gehäuses verbunden sein.

Prinzipiell kann sowohl ein Einströmen von Gas in das Gehäuse als auch ein Ausströmen von Gas aus dem Gehäuse über dieselbe Druckausgleichsleitung erfolgen. Der Schutzgaserzeuger kann so angeordnet sein, dass er nur von einströmendem Gas durchlaufen wird und nicht von ausströmendem Gas, wozu die Druckausgleichsleitung beispielsweise eine Abzweigung und optionale Ventile umfassen kann. Bei einem konstruktiv besonders einfachen Ausbau wird der Schutzgaserzeuger sowohl von einströmender Luft als auch ausströmendem Gas durchlaufen.

Damit der Schutzgaserzeuger allein von einströmender Luft durchlaufen wird, kann alternativ zusätzlich zur Druckausgleichsleitung (die in diesem Fall allein für einströmendes Gas genutzt wird) auch eine Auslassleitung vorgesehen sein. Über Einwegventile kann gesteuert werden, dass ein Druck im Gehäuse in einem vorgegebenen Bereich bleibt. In der Druckausgleichsleitung oder am Schutzgaserzeuger kann ein Einlass-Einwegventil angeordnet sein, welches einen Fluidauslass aus dem Gehäuse verhindert und eine Strömung vom Schutzgaserzeuger in das Gehäuse druckabhängig erlaubt. Das Einlass-Einwegventil kann stromaufwärts vom Schutzgaserzeuger (also in Strömungsrichtung vorm Schutzgaserzeuger) angeordnet sein. Hierdurch wird der Schutzgaserzeuger tatsächlich auch nur für Luft/Gase genutzt, die in das Gehäuse eingeleitet werden. Ist das Einlass-Einwegventil geschlossen, gelangt bei dieser Anordnung keine Umgebungsluft zum Schutzgaserzeuger. Alternativ kann das Einlass-Einwegventil aber auch stromabwärts vom Schutzgaserzeuger, also zwischen dem Schutzgaserzeuger und dem Gehäuse, angeordnet sein. Dadurch wird verhindert, dass übermäßig heißes Wärmetransferfluid den Schutzgaserzeuger erreichen kann. Prinzipiell können auch Einlass-Einwegventile sowohl vor als auch hinter dem Schutzgaserzeuger vorgesehen sein.

Das Einlass-Einwegventil öffnet, sobald ein Druck im Gehäuse um mindestens eine Druckdifferenz kleiner ist als ein Umgebungsluftdruck, wobei die Druckdifferenz insbesondere einen Wert zwischen 0,1 bar und 0,5 bar betragen kann. Hat die Umgebungsluft einen Normaldruck von etwa 1 bar, so öffnet das Einlasse-Einwegventil demnach, sobald der Druck im Gehäuse unter einen Schwellwert sinkt, wobei der Schwellwert zwischen 0,9 bar und 0,5 bar betragen kann.

Zum Druckausgleich kann auch eine Auslassleitung am Gehäuse vorhanden sein, welche einen Fluidauslass aus dem Gehäuse in eine bzw. die Umgebung des Energiespeichers ermöglicht. In der Auslassleitung ist optional ein Auslass-Einwegventil angeordnet, welches einen Fluideinlass in das Gehäuse verhindert und eine Strömung aus dem Gehäuse heraus druckabhängig erlaubt.

Das Auslass-Einwegventil kann so gestaltet sein, dass es öffnet, sobald ein Druck im Gehäuse um mindestens eine Druckdifferenz größer ist als ein Umgebungsluftdruck. Die Druckdifferenz zum Öffnen des Auslass-Einwegventils kann prinzipiell einen beliebigen positiven Wert haben. Es kann jedoch bevorzugt sein, wenn die Druckdifferenz betragsmäßig größer ist als die Druckdifferenz zum Öffnen des Einlass-Einwegventils. Hierdurch hat das Wärmetransferfluid im Gehäuse betriebsabhängig häufiger einen leicht erhöhten Druck im Vergleich zum Atmosphärendruck. Durch einen erhöhten Druck können die Wärmetransfereigenschaften verbessert sein. Die Druckdifferenz zum Öffnen des Auslass-Einwegventils (also die Differenz zum Umgebungsluftdruck) kann beispielsweise einen Wert zwischen 1,3 bar und 5 bar oder zwischen 1,3 bar und 2 bar haben.

Anstelle der beschriebenen Einwegventile können auch andere Ventile oder steuerbare Verschlüsse eingesetzt werden.

Die Wärmespeicherkörper im Gehäuse können prinzipiell beliebiger Art sein und insbesondere auch Steine umfassen. Die Vorteile des Schutzgaserzeugers kommen aber besonders zum Tragen, wenn die Wärmespeicherkörper Metallkörper sind oder umfassen. Das heißt, die Metallkörper bilden den Teil des Wärmespeichers, in dem bei Erhitzung der wesentliche Energieanteil, beispielsweise mindestens 80% der aufgenommenen Wärmeenergie, gespeichert wird. Die Metallkörper können insbesondere mehrere Vertikalstangen umfassen, an denen jeweils mehrere Horizontalstangen befestigt sind. Dieser Aufbau kann ausgeführt sein wie von der Anmelderin beschrieben in EP 18 203 053.6, eingereicht am 29.10.2018.

Als Gehäuse kann allgemein der Gehäuseabschnitt, welcher die Wärmespeicherkörper umgibt, angesehen werden; optional können unter dem Gehäuse auch Verbindungsleitungen als mitumfasst verstanden werden, welche wie auch das Gehäuse von Wärmetransferfluid durchströmt werden. Für den Druckausgleich und die Nutzung des Schutzgaserzeugers kommt es im Wesentlichen auf eine Verbindung zu einem Bereich an, welcher fluidmäßig mit dem Gehäuseabschnitt der Wärmespeicherkörper verbunden ist. So kann der Schutzgaserzeuger auch fluidmäßig mit einer Wärmetransferfluidleitung verbunden sein, welche in den Gehäuseabschnitt der Wärmespeicherkörper hineinführt, oder mit einer Wärmetransferfluidleitung, welche vom Gehäuseabschnitt der Wärmespeicherkörper wegführt. Es kann auch eine Strömungsmaschine, beispielsweise ein Ventilator, zum Befördern des Wärmetransferfluides vorhanden sein, insbesondere um das Wärmetransferfluid am elektrischen Heizer, den Wärmespeicherkörpern und dem Wärmetauscher entlang zu zirkulieren. Es kann ein Fluidkreislauf gebildet sein, welcher an diesen Komponenten entlang führt. Die Druckausgleichsleitung kann auch benachbart zur Strömungsmaschine oder an prinzipiell beliebiger Stelle am Fluidkreislauf angeordnet sein.

Der elektrische Heizer kann prinzipiell beliebig gestaltet sein, solange er elektrische Energie möglichst vollständig, beispielsweise zu mindestens 80%, in Wärmeenergie umwandelt. Ein elektrischer Heizer kann insbesondere resistiv arbeiten, das heißt er wird von elektrischem Strom durchflossen und aufgrund des elektrischen Widerstands erhitzt er sich dabei. Mehrere räumlich getrennte Heizeinheiten können auch gemeinsam den elektrischen Heizer bilden. Der elektrische Heizer beziehungsweise seine Heizeinheiten können im Gehäuseabschnitt der Wärmespeicherkörper angeordnet sein. Insbesondere können die Heizeinheiten zwischen den Wärmespeicherkörpern verteilt sein. Alternativ kann der elektrische Heizer aber auch außerhalb des Gehäuseabschnitts, an anderer Stelle des Fluidkreislaufs angeordnet sein. Das Wärmetransferfluid umströmt die Heizeinheiten und nimmt so Wärme auf, welches es darauf an die Wärmespeicherkörper weitergibt.

Der Wärmetauscher kann prinzipiell beliebig gestaltet sein, solange er Wärme vom Wärmetransferfluid weg übertragen kann. Beispielsweise kann er eine thermische Verbindung zwischen dem Fluidkreislauf des Wärmetransferfluides und einem Arbeitsfluidkreislauf darstellen. Wärme wird dann auf ein Arbeitsfluid im Arbeitsfluidkreislauf übertragen. Das Arbeitsfluid kann beispielweise über ein oder mehrere Turbinen-Generatoreinheiten oder eine andere Stromerzeugungseinrichtung elektrische Energie erzeugen. Eine Restwärme kann für Heizzwecke weitergenutzt werden. Der Wärmetauscher kann beispielsweise benachbarte oder ineinander verlaufende Rohre für Wärmetransferfluid und für Arbeitsfluid umfassen.

Die als zusätzliche Merkmale des erfindungsgemäßen Energiespeichers beschriebenen Eigenschaften ergeben bei bestimmungsgemäßer Verwendung Varianten des erfindungsgemäßen Verfahrens. Zudem kann die Steuereinheit des Energiespeichers dazu eingerichtet sein, beschriebene Verfahrensschritte auszuführen, insbesondere durch Ansteuerung der entsprechenden Komponenten des Energiespeichers.

Weitere Vorteile und Merkmale der Erfindung werden nachstehend mit Bezug auf die beigefügten schematischen Figuren beschrieben:
- Fig. 1: zeigt schematisch einen gattungsbildenden Energiespeicher;
- Fig. 2: zeigt schematisch einen verwandten Energiespeicher;
- Fig. 3: zeigt schematisch ein Ausführungsbeispiel eines erfindungsgemäßen Energiespeichers; und
- Fig. 4: zeigt vergrößert einen Ausschnitt aus Fig. 3.

Gleiche und gleich wirkende Bestandteile sind in den Figuren in der Regel mit denselben Bezugszeichen gekennzeichnet.

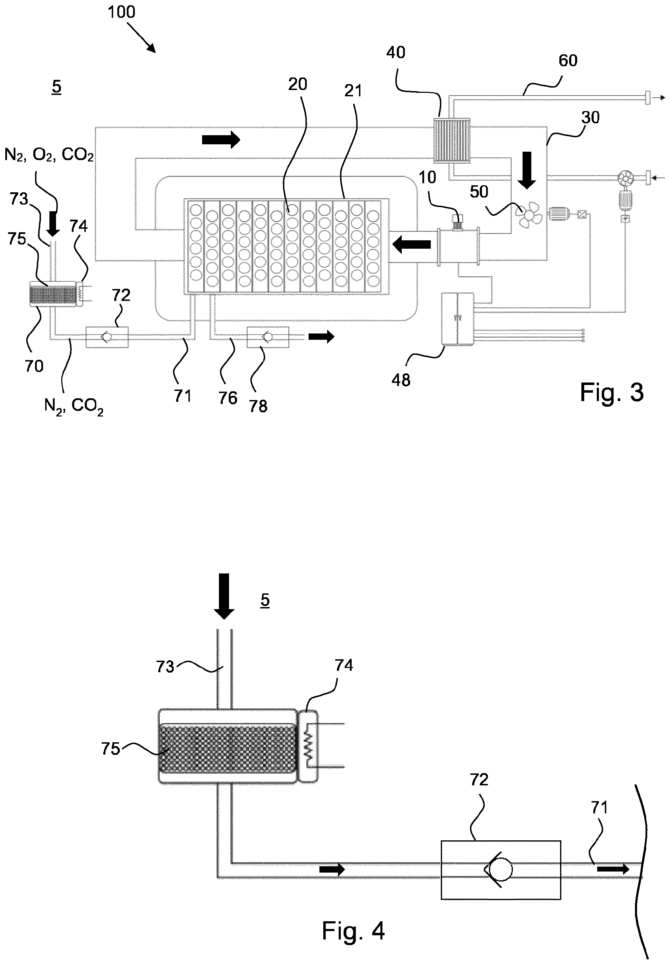

Fig. 3 zeigt ein Ausführungsbeispiel eines erfindungsgemäßen Energiespeichers 100. Der grundlegende Aufbau des Energiespeichers 100 kann dem Aufbau des eingangs beschriebenen Energiespeicher 100' entsprechen. Zur Energieaufnahme und Energiespeicherung erhitzt ein elektrischer Heizer 10 ein Wärmetransferfluid. Das erhitzte Wärmetransferfluid wird zu Wärmespeicherkörpern 20 geleitet und gibt Wärmeenergie an diese ab. Zur Entnahme von Wärmeenergie wird der elektrische Heizer 10 nicht betrieben, womit das Wärmetransferfluid nicht etwa Wärme an die Wärmespeicherkörper 20 abgibt, sondern von diesen aufnimmt. Das so erhitzte Wärmetransferfluid wird anschließend vorzugsweise zu einem Wärmetauscher 40 geleitet, wo es Wärme abgibt, beispielsweise an ein Arbeitsfluid in einer anderen Leitung oder in einem Arbeitsfluidkreislauf 60. Das Wärmetransferfluid umfasst ein Gasgemisch und kann optional auch Dampf umfassen. Es strömt angetrieben durch eine Strömungsmaschine 50, z.B. einen Ventilator, entlang der in Fig. 3 gezeigten Pfeile in einem Fluidkreislauf 30. Der Fluidkreislauf 30 bildet eine geschlossene Schleife und führt über den elektrischen Heizer 10, die Wärmespeicherkörper 20 und den Wärmetauscher 40. Eine elektronische Steuereinheit 48 kann den elektrischen Heizer 10, die Strömungsmaschine 50 und optional weitere Komponenten des Energiespeichers 100 steuern. Die Wärmespeicherkörper 20 sind in einem Gehäuse 21 angeordnet. Im dargestellten Beispiel befindet sich der elektrische Heizer 10 vor dem Gehäuse 21, wobei der elektrische Heizer 10 aber auch im Gehäuse 21 aufgenommen sein kann. Insbesondere kann er mehrere zwischen den Wärmespeicherkörpern 20 verteilte Heizeinheiten umfassen. Das Wärmetransferfluid strömt frei durch das Gehäuse 21, das heißt insbesondere ohne separierende Rohrleitungen im Gehäuse 21, welche das Wärmetransferfluid von den Wärmespeicherkörpern 20 trennen würden. Durch optionale Führungswände innerhalb des Gehäuses 21 kann das Wärmetransferfluid auch entlang einer Bahn an mehreren Wärmespeicherkörpern 20 nacheinander entlang geleitet werden. Aufgrund des großen Temperaturintervalls, über das die Wärmespeicherkörper 20 zur Energiespeicherung betrieben werden, schwanken die Temperatur und der Druck des Wärmetransferfluides im Gehäuse 21 ebenfalls stark.

Um einen Druckausgleich zwischen dem Inneren des Gehäuses 21 und einer Umgebung 5 außerhalb des Gehäuses 21 zu ermöglichen, umfasst das Gehäuse 21 eine Auslassleitung 76 zum Auslassen von Wärmetransferfluid bei zu hohem Druck im Gehäuse 21 und eine Druckausgleichsleitung 71 zum Einlassen von Wärmetransferfluid (nämlich behandelte Umgebungsluft) in das Gehäuse 21.

Die Auslassleitung 76 kann ein Einwegventil 78 (nachfolgend Auslass-Einwegventil 78) umfassen, über welches Wärmetransferfluid in die Umgebung 5 ausgelassen werden kann, wenn ein Innendruck im Gehäuse 21 einen Schwellwert zum Öffnen des Auslass-Einwegventils 78 übersteigt. Ansonsten bleibt das Auslass-Einwegventil 78 geschlossen.

Wie eingangs erläutert, soll vermieden werden, dass über die Druckausgleichsleitung 71 ein Wärmetransferfluid, das nennenswerte Anteile an Sauerstoffgas umfasst, in das Gehäuse 21 eingeleitet wird. Dies wird erfindungsgemäß durch einen Schutzgaserzeuger 70 erreicht, der mit der Druckausgleichsleitung verbunden ist. Der Schutzgaserzeuger 70 umfasst nicht etwa ein Reservoir an Schutzgas, sondern erzeugt ein Schutzgas aus einströmenden Gasen, welche insbesondere Luft / Umgebungsluft aus einer Umgebung 5 sein können. Die Umgebung 5 ist außerhalb des Gehäuses 21 und kann insbesondere von einem Innenraum des Gehäuses 21 durch eine Wärmeisolierungsschicht getrennt sein, welche die Wärmespeicherköper 20 umgibt. Wie in Fig. 3 schematisch angegeben, umfasst das in den Schutzgaserzeuger 70 einströmende Gasgemisch als Hauptbestandteile N₂, O₂ und CO₂. Im dargestellten Beispiel gelangt die Umgebungsluft über ein Einlassrohr 73 zum Schutzgaserzeuger 70, wobei prinzipiell auch auf das Einlassrohr 73 verzichtet werden kann. Das Einlassrohr 73 kann auch als Teil der Druckausgleichsleitung 71 angesehen werden.

Der Schutzgaserzeuger 70 aus Fig. 3 ist vergrößert in Fig. 4 gezeigt. Er umfasst ein Reduktionsmittel 75, bei dem es sich um ein mit Sauerstoffgas reagierendes Material handelt. Es kann zum Beispiel Kohle in Form von Pellets, gepresst oder als poröse Steine, umfassen. Bei kohlenstoffhaltigen Reduktionsmitteln kann einströmendes Sauerstoffgas O₂ zu CO₂ reagieren, welches sodann über die Druckausgleichsleitung 71 in das Gehäuse 21 einströmt. Die Hauptbestandteile des einströmenden Gasgemisches sind daher Sauerstoffgas und Kohlendioxid. Alternativ kann das Reduktionsmittel 75 auch ein Metall wie Zink oder Stahlwolle umfassen, welches vom Sauerstoffgas oxidiert wird und so den Sauerstoff bindet. Das ins Gehäuse 21 strömende Gas besteht dann im Wesentlichen aus N₂. Zum Aufheizen des Reduktionsmittels 75 oder der zum Reduktionsmittel 75 strömenden Luft wird eine optionale Heizung 74 verwendet. Diese kann beispielsweise Heizdrähte umfassen. So kann eine chemische Reaktion mit Sauerstoffgas erleichtert werden.

Der Schutzgaserzeuger 70 kann ein Gehäuse umfassen, in dem ein Strömungsquerschnitt von Gas im Vergleich zum Einlassrohr 73 und im Vergleich zur Druckausgleichsleitung 71 erhöht ist. Der erhöhte Querschnitt wird vom Reduktionsmittel 75 ausgefüllt, so dass eine große Reaktionsoberfläche bereitgestellt wird. Prinzipiell kann das Reduktionsmittel 75 auch direkt in die Druckausgleichsleitung 71 eingebracht sein, womit der Schutzgaserzeuger 75 einen Druckausgleichsleitungsabschnitt darstellen kann.

Das druckabhängige Einleiten von Gas als Wärmetransferfluid in das Gehäuse 21 kann prinzipiell durch aktiv gesteuerte Komponenten erfolgen. Es kann aber bevorzugt sein, wie dargestellt ein Einwegventil 72 (nachfolgend Einlass-Einwegventil 72) zu verwenden. Dieses öffnet, wenn der Druck im Gehäuse 21 unter eine festgelegte Schwelle sinkt. Allein im geöffneten Zustand erlaubt es ein Einströmen von Gasen über den Schutzgaserzeuger 70 und die Druckausgleichsleitung 71 in das Gehäuse 21. Das Einlass-Einwegventil 72 kann wahlweise stromaufwärts oder stromabwärts vom Schutzgaserzeuger 70 angeordnet sein, womit entweder eine thermische Entkopplung zwischen dem Gehäuseinnenraum und dem Schutzgaserzeuger 70 erreicht wird, oder es erreicht wird, dass Umgebungsluft nur dann den Schutzgaserzeuger 70 erreicht, wenn die Umgebungsluft auch behandelt und in das Gehäuse 21 eingeleitet werden soll.

Im dargestellten Beispiel führt die Druckausgleichsleitung 71 in den Abschnitt des Gehäuses 21, in dem sich die Wärmespeicherkörper 20 befinden. Prinzipiell kann die Druckausgleichsleitung aber auch an anderer Stelle mit dem Fluidkreislauf 30 verbunden sein, weshalb das Gehäuse 21 als die Begrenzung des vom Wärmetransferfluid eingenommenen Volumens angesehen werden kann und nicht auf den Gehäuseabschnitt beschränkt sein muss, in dem sich die Wärmespeicherkörper 20 befinden. Prinzipiell kann die Druckausgleichsleitung 71 auch dazu gestaltet sein, Gase in das Gehäuse 21 hinein und aus diesem heraus zu leiten. Auch kann prinzipiell eine Leitung mit dem Gehäuse 21 verbunden sein, welche sich sodann in die beschriebene Druckausgleichsleitung 71 und die Auslassleitung 76 aufspaltet.

Durch den Schutzgaserzeuger 70 kann vorteilhafterweise sichergestellt werden, dass ein Gasgemisch ohne Sauerstoffgas oder mit nur geringem Gehalt an Sauerstoffgas eingeleitet wird. Gleichzeitig ist der Raumbedarf gering, insbesondere verglichen mit einem Expansionsvolumen wie in Fig. 2 gezeigt.

## Patentansprüche

1. Energiespeicher zum Speichern von elektrischer Energie als Wärme, umfassend:
- einen elektrischen Heizer (10) zum Umwandeln von elektrischer Energie in Wärme,
- Wärmespeicherkörper (20), welche durch die Wärme erwärmt werden,
- einen Wärmetauscher (40) zum Ausgeben von Wärmeenergie aus dem Energiespeicher,
- ein Gehäuse (21), in dem zumindest die Wärmespeicherkörper (20) angeordnet sind, und
- eine Druckausgleichsleitung (71), welche mit dem Gehäuse (21) verbunden ist,
**dadurch gekennzeichnet,**
**dass** der Energiespeicher einen Schutzgaserzeuger (70) aufweist und dass die Druckausgleichsleitung (71) mit dem Schutzgaserzeuger (70) verbunden ist, wobei der Schutzgaserzeuger (70) angeordnet ist zum Aufnehmen von Umgebungsluft aus einer Umgebung (5),
**dass** der Schutzgaserzeuger (70) ein Reduktionsmittel (75) umfasst, welches durch Reaktion mit Sauerstoffgas einen Sauerstoffgehalt aufgenommener Umgebungsluft verringert, so dass über die Druckausgleichsleitung (71) und den Schutzgaserzeuger (70) in das Gehäuse (21) einströmende Gase einen im Vergleich zu Umgebungsluft reduzierten Sauerstoffgasgehalt haben.

2. Energiespeicher nach Anspruch 1,
**dadurch gekennzeichnet,**
**dass** das Reduktionsmittel (75) Kohlenstoff oder eine kohlenstoffhaltige Verbindung umfasst.

3. Energiespeicher nach Anspruch 1 oder 2,
**dadurch gekennzeichnet,**
**dass** das Reduktionsmittel (75) ein Metall umfasst.

4. Energiespeicher nach einem der Ansprüche 1 bis 3,
**dadurch gekennzeichnet,**
**dass** der Schutzgaserzeuger (70) eine Kassettenhalterung umfasst und das Reduktionsmittel (75) in einer austauschbaren Kassette angeordnet ist.

5. Energiespeicher nach einem der Ansprüche 1 bis 4,
**dadurch gekennzeichnet,**
**dass** der Schutzgaserzeuger (70) eine Heizung (74) umfasst zum Erwärmen des Reduktionsmittels (75).

6. Energiespeicher nach einem der Ansprüche 1 bis 5,
**dadurch gekennzeichnet,**
**dass** in der Druckausgleichsleitung (71) oder am Schutzgaserzeuger (70) ein Einlass-Einwegventil (72) angeordnet ist, welches einen Fluidauslass aus dem Gehäuse (21) verhindert und eine Strömung vom Schutzgaserzeuger (70) in das Gehäuse (21) druckabhängig erlaubt.

7. Energiespeicher nach dem vorherigen Anspruch,
**dadurch gekennzeichnet,**
**dass** das Einlass-Einwegventil (72) öffnet, sobald ein Druck im Gehäuse (20) um mindestens eine Druckdifferenz kleiner ist als ein Umgebungsluftdruck, wobei die Druckdifferenz zwischen 0,1 bar und 0,4 bar beträgt.

8. Energiespeicher nach einem der Ansprüche 1 bis 7,
**dadurch gekennzeichnet,**
**dass** zum Druckausgleich eine Auslassleitung (76) am Gehäuse (21) vorhanden ist, welche einen Fluidauslass aus dem Gehäuse (21) in eine Umgebung (5) ermöglicht.

9. Energiespeicher nach dem vorherigen Anspruch,
**dadurch gekennzeichnet,**
**dass** in der Auslassleitung (76) ein Auslass-Einwegventil (78) angeordnet ist, welches einen Fluideinlass in das Gehäuse (21) verhindert und eine Strömung aus dem Gehäuse (21) heraus druckabhängig erlaubt.

10. Energiespeicher nach dem vorherigen Anspruch,
**dadurch gekennzeichnet,**
**dass** das Auslass-Einwegventil (78) öffnet, sobald ein Druck im Gehäuse (20) um mindestens eine Druckdifferenz größer ist als ein Umgebungsluftdruck, wobei die Druckdifferenz zum Öffnen des Auslass-Einwegventils (78) betragsmäßig größer ist als die Druckdifferenz zum Öffnen des Einlass-Einwegventils (72).

11. Energiespeicher nach einem der vorherigen Ansprüche,
**dadurch gekennzeichnet,**
**dass** die Wärmespeicherkörper (20) aus Metall bestehen und Wärmetransferfluid im Gehäuse (21) an den metallischen Wärmespeicherkörpern (20) entlang geleitet wird.

12. Energiespeicher nach einem der vorherigen Ansprüche,
**dadurch gekennzeichnet,**
**dass** ein Fluidkreislauf (30) gebildet ist zum Leiten des Wärmetransferfluides entlang an dem elektrischen Heizer (10), den Wärmespeicherkörpern (20) und dem Wärmetauscher (40).

13. Verfahren zum Betreiben eines Energiespeichers zum Speichern von elektrischer Energie als Wärme, wobei das Verfahren umfasst:
- Umwandeln von elektrischer Energie in Wärme mittels eines elektrischen Heizers (10),
- Erwärmen von Wärmespeicherkörpern (20) durch die Wärme, wobei die Wärmespeicherkörper (20) in einem Gehäuse (21) angeordnet sind,
- Ausgeben von Wärmeenergie aus dem Energiespeicher mittels eines Wärmetauschers (40) und
- Bereitstellen eines Druckausgleichs im Gehäuse (21) über eine Druckausgleichsleitung (71), die mit dem Gehäuse (21) verbunden ist,
**gekennzeichnet durch** die folgenden Schritte:
- Aufnehmen von Umgebungsluft aus einer Umgebung (5) in einen Schutzgaserzeuger (70), wobei der Schutzgaserzeuger (70) mit der Druckausgleichsleitung (71) verbunden ist und ein Reduktionsmittel (75) umfasst,
- Verringern eines Sauerstoffgehalt aufgenommener Umgebungsluft durch Reaktion von Sauerstoffgas der aufgenommenen Umgebungsluft mit dem Reduktionsmittel (75), so dass über die Druckausgleichsleitung (71) und den Schutzgaserzeuger (70) in das Gehäuse (21) einströmende Gase einen im Vergleich zur Umgebungsluft reduzierten Sauerstoffgasgehalt haben.

## Claims

1. An energy storage system for storing electric energy as heat, comprising:
- an electric heater (10) for transforming electric energy into heat,
- heat-storing elements (20) heated by said heat,
- a heat exchanger (40) for dispensing thermal energy from the energy storage system,
- a housing (21), in which at least the heat-storing elements (20) are arranged, and
- a pressure-compensating line (71), which is connected to the housing (21),
**characterized in that**
the energy storage system comprises a protective gas generator (70), and the pressure-compensating line (71) is connected to the protective gas generator (70), wherein the protective gas generator (70) is arranged for taking in surrounding air from a surrounding area (5),
the protective gas generator (70) comprises a reducing agent (75), which reduces an oxygen content of surrounding air that has been taken in by means of its reaction with oxygen gas so that gases flowing into the housing (21) via the pressure-compensating line (71) and the protective gas generator (70) have a reduced oxygen-gas content in comparison to surrounding air.

2. The energy storage system according to claim 1,
**characterized in that**
the reducing agent (75) comprises carbon or a compound containing carbon.

3. The energy storage system according to claim 1 or 2,
**characterized in that**
the reducing agent (75) comprises a metal.

4. The energy storage system according to claims 1 to 3,
**characterized in that**
the protective gas generator (70) comprises a cassette holder and the reducing agent (75) is arranged in a replaceable cassette.

5. The energy storage system according to claims 1 to 4,
**characterized in that**
the protective gas generator (70) comprises a heating (74) for heating the reducing agent (75).

6. The energy storage system according to claims 1 to 5,
**characterized in that**
a one-way inlet valve (72) is arranged in the pressure-compensating line (71) or on the protective gas generator (70), the one-way inlet valve (72) preventing an outlet of fluid from the housing (21) and allowing a flow from the protective gas generator (70) into the housing (21) in a pressure-dependent manner.

7. The energy storage system according to the preceding claim,
**characterized in that**
the one-way inlet valve (72) opens as soon as a pressure in the housing (21) is lower than a surrounding air pressure by at least a pressure difference, wherein the pressure difference is between 0.1 bar and 0.4 bar.

8. The energy storage system according to claims 1 to 7,
**characterized in that**
an outlet line (76) is available on the housing (21) for pressure compensation, the outlet line (76) enabling an outlet of fluid from the housing (21) into a surrounding area (5).

9. The energy storage system according to the preceding claim,
**characterized in that**
arranged in the outlet line (76) is a one-way outlet valve (78), which prevents an inlet of fluid into the housing (21) and allows a flow out of the housing (21) in a pressure-dependent manner.

10. The energy storage system according to the preceding claim,
**characterized in that**
the one-way outlet valve (78) opens as soon as a pressure in the housing (20) is greater than a surrounding air pressure by at least a pressure difference, wherein an absolute value of the pressure difference for opening the one-way outlet valve (78) is greater than an absolute value of the pressure difference for opening the one-way inlet valve (72).

11. The energy storage system according to one of the preceding claims,
**characterized in that**
the heat-storing elements (20) consist of metal and heat-transfer fluid in the housing (21) is guided along the metal heat-storing elements (20).

12. The energy storage system according to one of the preceding claims,
**characterized in that**
a fluid circuit (30) is formed for guiding the heat-transfer fluid along the electric heater (10), the heat-storing elements (20) and the heat exchanger (40).

13. A method for operating an energy storage system for storing electric energy as heat, wherein the method comprises:
- transforming electric energy into heat by means of an electric heater (10),
- heating heat-storing elements (20) by means of said heat, wherein the heat-storing elements (20) are arranged in a housing (21),
- dispensing thermal energy from the energy storage system by means of a heat exchanger (40) and
- providing a pressure compensation in the housing (21) via a pressure-compensating line (71) connected to the housing (21),
**characterized by** the following steps:
- taking surrounding air from a surrounding area (5) into a protective gas generator (70), wherein the protective gas generator (70) is connected to the pressure-compensating line (71) and comprises a reducing agent (75),
- reducing an oxygen content of surrounding air that has been taken in by means of a reaction of oxygen gas in the surrounding air that has been taken in with the reducing agent (75) so that gases flowing into the housing (21) via the pressure-compensating line (71) and the protective gas generator (70) have a reduced oxygen-gas content in comparison with the surrounding air.

## Revendications

1. Dispositif de stockage d'énergie pour stocker de l'énergie électrique en tant que chaleur, comprenant :
- un dispositif de chauffage électrique (10) pour convertir de l'énergie électrique en chaleur,
- des corps de stockage de chaleur (20), qui sont chauffés par la chaleur,
- un échangeur de chaleur (40) pour émettre de l'énergie thermique à partir du dispositif de stockage d'énergie,
- un boîtier (21) dans lequel sont disposés au moins les corps de stockage de chaleur (20), et
- une conduite de compensation de pression (71) qui est connectée au boîtier (21),
**caractérisé en ce que**
le dispositif de stockage d'énergie comprend un générateur de gaz protecteur (70) et
la conduite de compensation de pression (71) est connectée au générateur de gaz protecteur (70), le générateur de gaz protecteur (70) étant agencé pour recevoir de l'air ambiant d'un environnement (5),
le générateur de gaz de protection (70) comprend un agent réducteur (75) qui réduit une teneur en oxygène d'air ambiant absorbé en réagissant avec du gaz oxygène, de sorte que les gaz s'écoulant dans le boîtier (21) via la conduite de compensation de pression (71) et le générateur de gaz de protection (70) ont une teneur en gaz oxygène réduite par rapport à l'air ambiant.

2. Dispositif de stockage d'énergie selon la revendication 1
**caractérisé en ce que**
l'agent réducteur (75) comprend du carbone ou un composé contenant du carbone.

3. Dispositif de stockage d'énergie selon la revendication 1 ou 2
**caractérisé en ce que**
l'agent réducteur (75) comprend un métal.

4. Dispositif de stockage d'énergie selon une des revendications 1 à 3
**caractérisé en ce que**
le générateur de gaz protecteur (70) comprend un porte-cassette et l'agent réducteur (75) est disposé dans une cassette interchangeable.

5. Dispositif de stockage d'énergie selon une des revendications 1 à 4
**caractérisé en ce que**
le générateur de gaz protecteur (70) comprend un dispositif de chauffage (74) pour chauffer l'agent réducteur (75).

6. Dispositif de stockage d'énergie selon une des revendications 1 à 5
**caractérisé en ce que**
dans la conduite de compensation de pression (71) ou sur le générateur de gaz de protection (70), est disposée une soupape d'entrée unidirectionnelle (72) qui empêche une sortie du fluide hors du boîtier (21) et permet un écoulement du générateur de gaz de protection (70) dans le boîtier (21) en fonction de la pression.

7. Dispositif de stockage d'énergie selon la revendication précédente
**caractérisé en ce que**
la soupape unidirectionnelle d'entrée (72) s'ouvre dès qu'une pression dans le boîtier (20) est d'au moins une différence de pression inférieure à une pression d'air ambiant, la différence de pression étant comprise entre 0,1 bar et 0,4 bar.

8. Dispositif de stockage d'énergie selon une des revendications 1 à 7
**caractérisé en ce que**
à des fins de compensation de la pression, une conduite de sortie (76) est prévue sur le boîtier (21), laquelle permet au fluide de sortir du boîtier (21) dans un environnement (5).

9. Dispositif de stockage d'énergie selon la revendication précédente
**caractérisé en ce que**
dans la conduite de sortie (76) est disposée une soupape unidirectionnelle de sortie (78) qui empêche le fluide de pénétrer dans le boîtier (21) et permet un écoulement hors du boîtier (21) en fonction de la pression.

10. Dispositif de stockage d'énergie selon la revendication précédente
**caractérisé en ce que**
la soupape unidirectionnelle de sortie (78) s'ouvre dès qu'une pression dans le boîtier (20) est d'au moins une différence de pression supérieure à une pression d'air ambiant, tandis que la différence de pression pour ouvrir la soupape unidirectionnelle de sortie (78) est supérieure en quantité à la différence de pression pour ouvrir la soupape unidirectionnelle d'entrée (72).

11. Dispositif de stockage d'énergie selon une des revendications précédentes
**caractérisé en ce que**
les corps de stockage de chaleur (20) sont en métal et le fluide de transfert de chaleur dans le boîtier (21) est conduit le long des corps de stockage de chaleur métalliques (20).

12. Dispositif de stockage de chaleur selon une des revendications précédentes
**caractérisé en ce que**
un circuit de fluide (30) est formé pour faire passer le fluide de transfert de chaleur le long du dispositif de chauffage électrique (10), des corps de stockage de chaleur (20) et de l'échangeur de chaleur (40).

13. Procédé pour le fonctionnement d'un dispositif de stockage d'énergie pour stocker de l'énergie électrique sous forme de chaleur, le procédé comprenant :
- la conversion d'énergie électrique en chaleur au moyen d'un dispositif de chauffage électrique (10),
- le chauffage de corps de stockage de chaleur (20) par la chaleur, tandis que les corps de stockage de chaleur (20) sont disposés dans un boîtier (21),
- l'émission d'énergie thermique en provenance du dispositif de stockage d'énergie au moyen d'un échangeur de chaleur (40) et
- la mise à disposition d'une compensation de pression dans le boîtier (21) via une conduite de compensation de pression (71) reliée au boîtier (21),
**caractérisé par** les étapes suivantes :
- la réception d'air ambiant d'un environnement (5) dans un générateur de gaz protecteur (70), tandis que le générateur de gaz protecteur (70) est relié à la conduite de compensation de pression (71) et comprend un agent réducteur (75),
- la réduction d'une teneur en oxygène de l'air ambiant reçu en faisant réagir l'oxygène gazeux de l'air ambiant reçu avec l'agent réducteur (75), de sorte que les gaz s'écoulant dans le boîtier (21) via la conduite de compensation de pression (71) et le générateur de gaz protecteur (70) ont une teneur en oxygène gazeux réduite par rapport à l'air ambiant.
